# EUROPÄISCHE PATENTSCHRIFT

(11) **EP 4 063 175 B1**
(45) Veröffentlichungstag und Bekanntmachung des Hinweises auf die Patenterteilung: **04.11.2026**
(21) Anmeldenummer: 22160213.9
(22) Anmeldetag: 04.03.2022
(51) Int. Cl.: B60L 50/53, B60L 1/00, B60L 9/18, H02J 9/04

(54) **VERFAHREN ZUM BETREIBEN EINES SCHIENENFAHRZEUGS UND SCHIENENFAHRZEUG**
RAIL VEHICLE AND METHOD FOR OPERATING A RAIL VEHICLE
PROCÉDÉ DE FONCTIONNEMENT D'UN VÉHICULE FERROVIAIRE ET VÉHICULE FERROVIAIRE

(30) Priorität: 26.03.2021 DE 102021202996
(43) Veröffentlichungstag der Anmeldung: 28.09.2022
(73) Patentinhaber: Siemens Mobility GmbH, 80997 München (DE)
(72) Erfinder: Grosse-von Tongeln, Thorben, 41352 Korschenbroich (DE); Schwarzer, Jens Konstantin, 47809 Krefeld (DE); Detterbeck, Manfred, 90530 Wendelstein (DE)
(74) Vertreter: Siemens Patent Attorneys

(56) Entgegenhaltungen:
- DE-A1- 102009 008 549
- DE-A1- 102017 213 306
- FR-A1- 2 919 768

## Beschreibung

Die Erfindung betrifft ein zum Betreiben eines Schienenfahrzeugs gemäß dem Oberbegriff des Anspruchs 1 und ein Schienenfahrzeug gemäß dem Oberbegriff des Anspruchs 7.

Es ist bekannt das Schienenfahrzeuge im Pendel- bzw. Nahverkehr, auch als so genanntes "Commuter Rail" bekannt, sowie im Fernverkehr zum Einsatz kommen. In Letzterem werden vermehrt auch als so genannte "High Speed (Inter)Rail" bekannte Schnellzüge, wie beispielsweise die Velaro Züge von Siemens Mobility, eingesetzt.

Die Ausgestaltung der Schienenfahrzeuge und der notwendigen Infrastruktur unterliegt dabei einer Normierung und Regulierung. Ferner legt auch die Deutsche Bahn Anforderungen an Schienenfahrzeuge fest, die Hersteller und Betreiber von Zugverbindungen innerhalb Deutschlands beachten müssen.

Nicht zuletzt weil Schienenfahrzeuge im Fernverkehr auch über Ländergrenzen hinweg Ziele verbinden, aber auch aufgrund der Harmonisierungs- und Regulierungsbestrebungen der Europäischen Union, gibt es europäische Normen, die beachtet werden müssen und eine Interoperabilität innerhalb Europas gewährleisten sollen.

Hierzu gehören die so genannten "technischen Spezifikationen für die Interoperabilität" (TSI) von denen eine, die so genannte TSI ISO Loc&Pas nach der Verordnung 1302/2014 vom 18.11.2014, die technische Spezifikation für das Teilsystem "Fahrzeuge - Lokomotiven und Personenwangen" regelt. Gemäß dieser TSI wird gefordert, dass ein CO2 Gehalt in der Luft innerhalb der Fahrzeuge minimal ist und einen dies gewährleistenden Grenzwert nicht überschreitet.

Im regulären Betrieb kann dies beispielsweise durch Ein- und Ausstiegsvorgänge sowie Lüftungseinrichtungen gewährleistet werden.

Problematisch ist die Einhaltung dieser Forderung nach einem Minimum an O2-Gehalt in der Luft im Falle des Ausfalles der Hauptenergieversorgung, also der Oberleitung. In so einem Fall befindet sich ein Schienenfahrzeug, nach möglichem Ausrollen oder Abbremsprozessen, in der Regel im Stillstand.

Bisher können derartige Situationen durch das Öffnen vorhandener Klappfenster oder durch die Verwendung zusätzlicher bzw. für den Notbetrieb vorgesehener Leistungselektronik gelöst werden, die aus den in Schienenfahrzeugen üblicherweise vorgesehenen Batterien gespeist wird, um Wechselstrom-, insbesondere Drehstromverbraucher, wie etwa Lüfter, zu versorgen.

Nachteilig ist es, dass die Klappfenster nicht immer vorhanden, geschlossen oder aus Sicherheitsgründen sogar verriegelt sind und daher manuell geöffnet, insbesondere durch einen Zugbegleiter entsperrt werden müssen. Nicht immer sind Personen im Wagen und der Zugbegleiter muss durch den gesamten Zug gehen, um die Fenster zu öffnen, so dass es zu starken Verzögerungen und enormer Anreicherung von CO2 kommen kann. Demgegenüber ist der Einsatz von Umrichtern zwar schneller, ist aber herausfordernd hinsichtlich Zugdesign und -aufbau und erzeugt daher größeren Aufwand aber auch höhere Kosten für die Realisierung.

Aus der DE 10 2017 213 306 A1 ist eine Energieversorgungseinrichtung für ein Schienenfahrzeug bekannt, aufweisend ein elektrisches Bordnetz sowie eine mit dem Bordnetz verbundene Umrichtereinheit, welche einen Umrichter zum Einspeisen elektrischer Energie in das Bordnetz sowie einen mit dem Umrichter verbundenen Zwischenkreis zum Versorgen des Umrichters mit elektrischer Energie umfasst.

Aus der DE 10 2009 008549 A1 eine Anordnung zum Betreiben von Verbrauchern in einem Schienenfahrzeug mit elektrischer Energie bekannt, wobei die Anordnung wahlweise von einem Energieversorgungsnetz oder von einer Motor-Generator-Kombination mit elektrischer Energie versorgbar ist bzw. versorgt wird.

Aus der FR 2 919 768 A1 ist ein Verfahren zur Versorgung von Nothilfsverbrauchern eines Schienenfahrzeugs bekannt, bei dem ein bordseitiger wiederaufladbarer Energiespeicher und eine Leistungselektronik eines Batterieladegeräts verwendet werden, um im Notbetrieb eine Versorgung, insbesondere eine dreiphasige Versorgung, von Hilfsverbrauchern bereitzustellen.

Die der Erfindung zugrundeliegende Aufgabe ist es daher, eine Lösung anzugeben, die die Nachteile des Standes der Technik überwindet. Insbesondere liegt die technische Aufgabe darin, eine Lösung anzugeben, die es ermöglicht das während der Zeitdauer des Ausfalls der Energieversorgung eines Schienenfahrzeugs den CO2 Wert aufwandsarm und so lange wie erforderlich unter dem vorgeschriebenen Grenzwert zu halten.

Diese Aufgabe wird ausgehend von dem Verfahren zum Betreiben eines Schienenfahrzeugs gemäß dem Oberbegriff des Anspruchs 1 durch dessen kennzeichnenden Merkmale, sowie ausgehend von dem Schienenfahrzeug gemäß dem Oberbegriff des Anspruchs 7, durch dessen kennzeichnenden Merkmale gelöst.

Bei dem erfindungsgemäßen Verfahren zum Betreiben eines Schienenfahrzeugs mit mindestens einem aus einem von einem Eingangsstromkreis abgezweigten Traktionszwischenkreis gespeisten, elektrische Fahrmotoren aufweisenden Motorwagen und mindestens einem nicht angetriebenen Wagen bei dem
- mindestens eine Batterie durch ein Batterieladegerät wiederaufladbar betrieben wird, wobei die Batterie hierzu mit zumindest einer Gleichstromenergieversorgung des Schienenfahrzeugs verbunden ist,
- die Batterie zur Speisung von Gleichstromlasten funktional mit diesen Gleichstromlasten verbunden, betrieben und genutzt wird, ist es erfindungsgemäß vorgesehen, dass
- die Batterie derart betrieben wird, dass die Verbindung zu den Gleichstromlasten bei Ausfall einer Energieversorgung durch den Eingangsstromkreis zu mindestens einem ersten Zeitpunkt, insbesondere bei Auftreten eines Ausfalls einer Energieversorgung des Eingangskreises (EK), zumindest temporär trennbar ist,
- die Batterie den Umrichter eingangsseitig zumindest temporär verbindbar versorgt, wobei die Verbindung mit dem Umrichter zeitlich disjunkt zur Verbindung mit den Gleichstromlasten erfolgt und während der Verbindung mit dem Umrichter über diesen Umrichter Gleichstromlasten und zumindest Teile von Wechselstromlasten und/oder den Motor mit Energie versorgt werden.

Durch das erfindungsgemäße Verfahren wird eine einfache, aufwandsarm zu realisierende Lösung aufgezeigt, mit der Betriebsfälle in denen die Einhaltung der Anforderungen an den CO2 Anteil in der Luft, insbesondere nach der europäischen Norm, aufgefangen werden können. Die Vorteile ergeben sich insbesondere dadurch, dass vorhandene Bordmittel wie die Batterie und der Umrichter genutzt werden und lediglich durch geringe Anpassungen in der Ausführung ihrer Beschaltung, also Verbindung und/oder (Potenzial)Trennung hierzu in die Lage versetzt werden und dies so, dass auch elektromagnetische Verträglichkeit gewährleistet ist. Ferner gewährleistet sie bei Ausfall der Energieversorgung des Eingangskreises also bei Ausfall der Hauptenergieversorgung die Versorgung Wechsel (AC)- und Gleichstrom (DC)-Verbrauchern.

Bei dem erfindungsgemäßen Schienenfahrzeug aufweisend
- mindestens eine aus einem von einem Eingangsstromkreis abgezweigten Traktionszwischenkreis gespeisten, elektrische Fahrmotoren aufweisenden Motorwagen und mindestens einem nicht angetriebenen Wagen bei dem
   - mindestens eine Batterie, die mit zumindest einer Gleichstromenergieversorgung des Schienenfahrzeugs derart verbunden ist, dass es durch ein Batterieladegerät des Schienenfahrzeugs wiederaufladbar betrieben wird,
   - die Batterie zur Speisung von Gleichstromlasten funktional mit diesen Gleichstromlasten ausgestaltet und verbunden ist, ist es erfindungsgemäß vorgesehen, dass
   - die Batterie derart ausgestaltet ist, dass die Verbindung zu den Gleichstromlasten bei Ausfall einer Energieversorgung durch den Eingangsstromkreis zu mindestens einem ersten Zeitpunkt, insbesondere bei Auftreten eines Ausfalls einer Energieversorgung des Eingangskreises, zumindest temporär trennbar ist,
   - die Batterie derart ausgestaltet ist, dass sie mit dem Umrichter zumindest temporär verbindbar ist, wobei die Verbindung mit dem Umrichter zeitlich disjunkt zur Verbindung mit den Gleichstromlasten erfolgt und während der Verbindung mit dem Umrichter zumindest Teile von Wechselstromlasten und/oder den Motor mit Energie versorgt werden.

Das erfindungsgemäße Schienenfahrzeug zeichnet sich vor allem dadurch vorteilhaft aus, dass es die Mittel zur Durchführung des Verfahrens einer seiner Ausgestaltungen und Weiterbildungen umfasst. Hierdurch trägt sie zur Implementierung und mutatis mutandis damit zur Realisierung der im Zusammenhang mit dem Verfahren genannten Vorteile bei.

Weitere vorteilhafte Ausgestaltungen und Weiterbildungen der Erfindung sind durch die Unteransprüche angegeben.

Das erfindungsgemäße Verfahren wird vorzugsweise derart weitergebildet, dass die Batterie (BAT) derart ausgestaltet ist, dass sie mit dem Traktionszwischenkreis (TR-ZWK, TR-PWK) zur Energieversorgung des Motors M zumindest temporär verbindbar ist. Hierdurch kann das Schienenfahrzeug zumindest temporär betrieben werden, beispielsweise, um aus einem Gefahrenbereich bewegt oder zu einem Streckenteil mit funktionierender Oberleitung, also Hauptenergieversorgung, bewegt zu werden.

Das erfindungsgemäße Verfahren kann vorzugsweise derart weitergebildet werden, dass die Batterie elektromagnetisch geschirmt betrieben wird. Hierdurch wird eine Belastung hinsichtlich elektromagnetischer Verträglichkeit (EMV), die durch den erfindungsgemäßen Anschluss des bestehenden Umrichters und/der des Traktionszwischenkreises an die Batterie gegeben ist, Rechnung getragen und die EMV verbessert.

Alternativ oder ergänzend kann das erfindungsgemäße Verfahren derart weitergebildet werden, dass die Gleichstromenergieversorgung zumindest für die ersten Zeitpunkte mit den Gleichstromlasten verbunden werden. Hierdurch wird die Versorgung der Gleichstromlasten gewährleistet, so dass an Bord des Schienenfahrzeugs diesbezügliche Einbußen bei Ausfall der Energieeinspeisung, insbesondere der Oberleitung, aufgefangen werden.

Vorzugsweise wird das erfindungsgemäße Verfahren dabei derart weitergebildet, dass das Batterieladegerät zu ersten Zeitpunkten mit den Gleichstromlasten verbunden wird. Das Batterieladegerät stellt eine besonders gut geeignete Gleichstromversorgung dar, da es in der Regel immer in Schienenfahrzeugen vorgesehen sein wird und somit einen der zentralen erfindungsgemäßen Gedanken, möglichst die im Normalbetrieb vorgesehenen Funktionseinheiten zu ersten Zeitpunkten, also Zeitpunkten des Ausfalls der Einspeiseenergieversorgung zu nutzen.

Bei einer weiteren Weiterbildung des erfindungsgemäßen Verfahrens erfolgt der Betrieb eines Schienenfahrzeugs derart, dass die Gleichstromenergieversorgung Redundanzen, insbesondere, dass eine erste und zweite Batterie und/oder ein erster und zweiter Umrichter betrieben werden, zu ersten Zeitpunkten die zweite Batterie direkt und/oder die erste Batterie über den zweiten Umrichter zumindest temporär mit den Gleichstromlasten verbunden wird. Auch hierdurch wird der erfinderische Gedanke der Nutzung bereits für den Normalbetrieb vorhandener Funktionseinheiten weiter unterstützt, indem für den durchaus üblichen Fall dass es mehrere Batterien und/oder Umrichter gibt, die für den Normalbetrieb genutzt werden, Teile davon für den Notfallbetrieb bei Ausfall der Hauptenergieversorgung auf erfindungsgemäße Art zu betreiben.

Um eine elektromagnetische Verträglichkeit zu erhöhen, ist bei einer bevorzugten Weiterbildung des Schienenfahrzeugs die gemäß dem erfindungsgemäßen Verfahren genutzte Batterie mit einer elektromagnetischen Schirmung ausgeführt.

Alternativ oder ergänzend wird das erfindungsgemäße Schienenfahrzeug derart weitergebildet, dass die Gleichstromenergieversorgung derart ausgestaltet ist, dass sie zumindest für die ersten Zeitpunkte mit den Gleichstromlasten derart verbunden ist, dass es sie in der Zeit, in der sie von der Batterie getrennt ist, die Gleichstromlasten mit Energie versorgt. Hierdurch wird ein erfindungsgemäßes Zuschalten der Gleichstromenergieversorgung für die Gleichstromlasten zu ersten Zeitpunkten, also im Notfallbetrieb realisiert.

Vorzugsweise wird das erfindungsgemäße Schienenfahrzeug dabei derart weitergebildet, dass das Batterieladegerät als eine bereits vorhandene Gleichstromversorgung derart ausgestaltet ist, dass es zu ersten Zeitpunkten mit den Gleichstromlasten zu dem genannten Zweck derart verbunden ist, dass es im Notfallbetrieb, wenn sie von der Batterie getrennt ist, die Gleichstromlasten mit Energie versorgt.

Alternativ oder ergänzend ist die Weiterbildung des erfindungsgemäßen Schienenfahrzeugs derart von Vorteil, dass bei Betrieb eines Schienenfahrzeugs derart, dass die Gleichstromenergieversorgung Redundanzen aufweist, insbesondere dass eine erste und zweite Batterie und/oder ein erster und zweiter Umrichter betrieben werden, zu ersten Zeitpunkten die zweite Batterie direkt und/oder die erste Batterie (BAT) über den zweiten Umrichter zumindest temporär mit den Gleichstromlasten verbindbar ist.

Die in Bezug auf das Verfahren zum Betreiben eines Schienenfahrzeugs angeführten Vorteile und bevorzugten Ausgestaltungen lassen sich also sinngemäß auf das erfindungsgemäße Schienenfahrzeug und seine sich mit den Ausgestaltungen des Verfahrens ergebenden bevorzugten Ausgestaltungen übertragen.

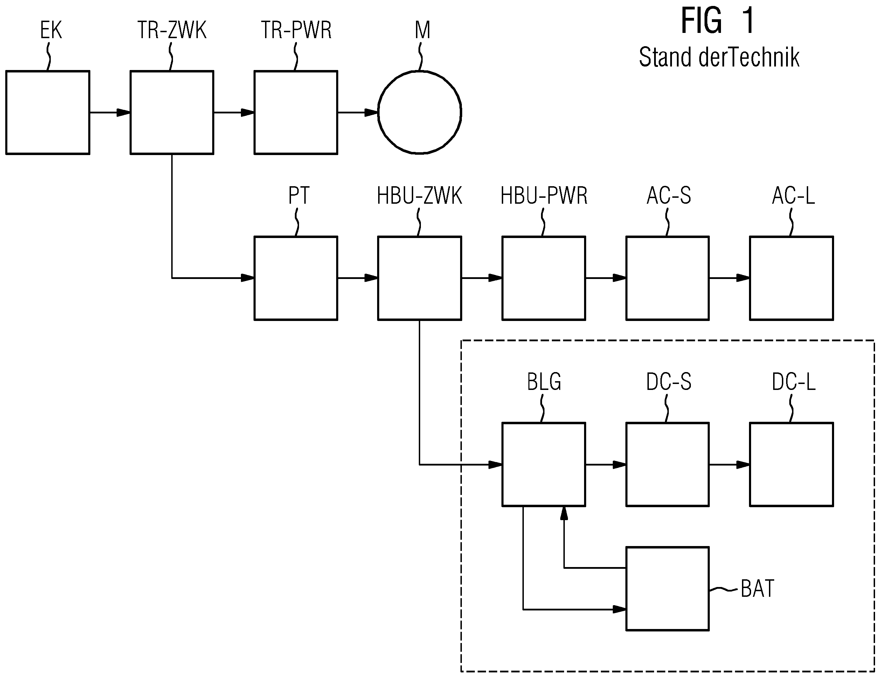

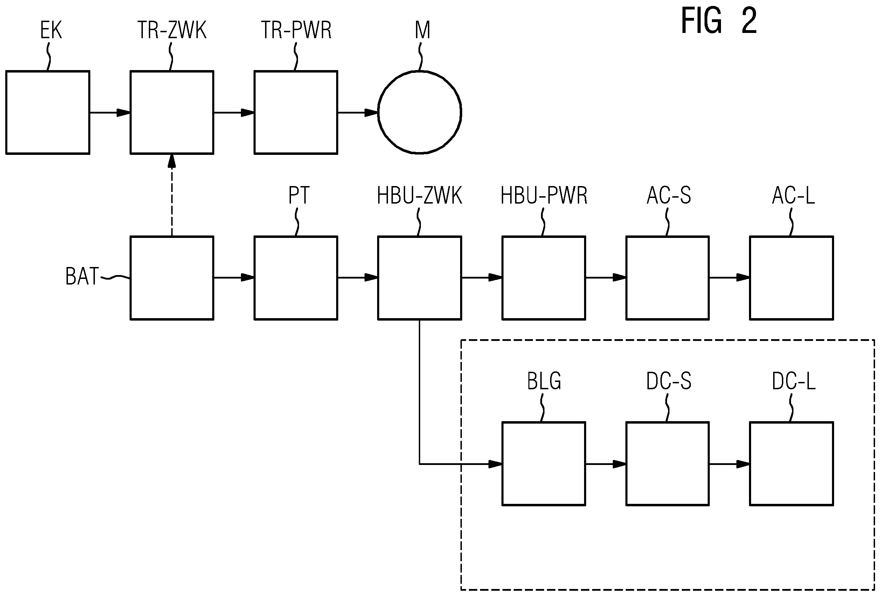

Weitere Vorteile und Details der Erfindung werden ausgehend von dem in der FIGUR 1 dargestellten Stand der Technik anhand der in FIGUR 2 dargestellten Ausführungsbeispiele der Erfindung, d.h**.** ein Ausführungsbeispiel der erfindungsgemäßen Verfahrensweise und ein Ausführungsbeispiel der erfindungsgemäßen Komponenten des Schienenfahrzeugs anhand eines beide Beispiele schematisch darstellenden Funktionsdiagrams erläutert.

Dabei zeigt
- FIGUR 1: schematisch ein Funktionsdiagramm von Komponenten eines Schienenfahrzeugs gemäß Stand der Technik und deren Interaktion,
- FIGUR 2: schematisch ein Funktionsdiagramm von Komponenten eines Schienenfahrzeugs gemäß Ausführungsbeispiel des erfindungsgemäßen Schienenfahrzeugs und deren Interaktion gemäß Ausführungsbeispiel des erfindungsgemäßen Verfahrens.

Bei den im Folgenden, ausgehend von dem in FIGUR 1 gezeigten Stand der Technik, in der FIGUR 2 erläuterten Ausführungsbeispielen handelt es sich um bevorzugte Ausführungsformen und Weiterbildungen der Erfindung.

Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind.

Des Weiteren sind die beschriebenen Ausführungsformen auch durch weitere der bereits beschriebenen Merkmale der Erfindung ergänzbar. Gleiche Bezugszeichen haben in den verschiedenen Figuren die gleiche Bedeutung.

Bei der Umsetzung des gemäß Ausführungsbeispielen beschriebenen Betriebes erfolgt dabei bei einer Störung von einem Betrieb gemäß Stand der Technik, ein Übergang von der gemäß Stand der Technik bekannten Funktionsweise nach dem Funktionsdiagramm gemäß Figur 1 in einen Betrieb gemäß der Ausführungsbeispiele der Erfindung wie sie schematisch durch das Funktionsdiagramm nach Figur 2 gezeigt ist. Für den normalen Betrieb erfolgt dann wieder ein Übergang in einen - gemäß dem Funktionsdiagramm nach Figur 1 - gezeigten Betrieb.

In FIGUR 1 ist schematisch eine typische Konfiguration der Energieversorgung eines Schienenfahrzeuges gemäß Stand der Technik dargestellt.

Zu erkennen ist ein Eingangskreis EK. Dieser Eingangskreis EK wird üblicher Weise aus der Fahrleitung versorgt. Der Eingangskreis EK speist damit ein dem Eingangskreis EK folgenden Funktionsmodul, einen so genannten Traktionszwischenkreis TR-ZWK.

Ferner ist zu erkennen, dass als ein dem Traktionszwischenkreis TR-ZWK folgendes Funktionsmodul und mit ihm somit ebenfalls verbundene Funktionseinheit, der so genannte Pulswechselrichter TR-PWR folgt. Aufgabe des Pulswechselrichters TR-ZWK ist es die Eingangsgleichspannung, die vom Traktionszwischenkreis TR-ZWK bereitgestellt wird, in eine dreiphasige Ausgangsspannung mit veränderlicher Amplitude, Phase und Frequenz umzusetzen. Der Pulswechselrichter TR-ZWK ist damit zur Anspeisung dreiphasiger elektrischer Maschinen (Asynchronmaschine, Synchronmaschine) befähigt. Wie in FIGUR 1 gezeigt wird, ist das gemäß dem Stand der Technik für die Anspeisung der Antriebsmotoren M gedacht. Daher ist dieses Funktionsmodul als dem Pulswechselrichter TR-PWR folgend und mit ihm verbunden dargestellt.

Diese bisher beschriebenen Funktionsmodule EK, TR-ZWK, TR-PWR stellen damit die Energie für eine Traktion bereit. Traktion bezeichnet bei Bahnen die Beförderung von Zügen oder Wagengruppen. Entsprechend des beschriebenen Vorgangs handelt es sich in dem Beispiel um einen elektrischen Antrieb und somit im Gegensatz zu einem Verbrennungstriebwagen um eine elektrische Traktion.

Wie in der FIGUR 1 zu erkennen ist, versorgt der TraktionsZwischenkreis TR-ZWK außerdem einen vom TR-ZWK potenzialgetrennten Hilfsbetriebsumrichters, welcher einen Hilfsbetriebsumrichter-Zwischenkreis HBU-ZWK aufweist. In der FIGUR 1 ist die Potenzialtrennung durch das Funktionsmodul Potenzialtrennung PT, welches zwischen Traktionszwischenkreis TR-ZWK zum Hilfsbetriebsumrichter-Zwischenkreis HBU-ZWK angeordnet und mit ihnen verbunden ist, dargestellt.

Als Hilfsbetriebsumrichter (HBU) oder auch Bordnetzumrichter wird gemäß Stand der Technik ein Stromrichter eines Triebfahrzeuges verstanden, der die Versorgung der so genannten Nebenaggregate mit elektrischer Energie sicherstellt.

Bei elektrischen Triebfahrzeugen in Wechselstromnetzen wird der Hilfsbetriebsumrichter aus einer gesonderten HBU Wicklung des Haupttransformators oder direkt aus dem Zwischenkreis gespeist; bei Gleichstromnetzen wie es dem dargestellten Beispiel des Standes der Technik zugrunde gelegt ist, erfolgt dies direkt aus der Fahrleitung.

Als Nebenaggregate werden dabei in der Regel - zur Abgrenzung von einem Hauptaggregat - alle Hilfsmaschinen eines Fahrzeugs, die nicht direkt seine Fortbewegung, die Traktion, bewirken, verstanden.

Gemäß Stand der Technik speist der Hilfsbetriebsumsetzer auch in der Regel ein Batterieladegerät BLG, welches eine oder mehrere Bordbatterien BAT versorgt.

Diese Funktionen sind aus der Darstellung der FIGUR 1 dadurch zu entnehmen, dass durch Hilfsbetriebsumrichter-Zwischenkreis HBU-ZWK, der die genannten Funktionen bereitstellt, neben einem Hilfsbetriebsumrichter-Pulswechselrichter HBU-PWR auch ein Batterieladegerät BLG versorgt.

Beide sind dem dargestellten Beispiel aus dem Stand der Technik dem Hilfsbetriebsumrichter-Zwischenkreis HBU-ZWK hierzu nachgeschaltet. Das Batterieladegerät BLG lädt eine oder mehrere Batterien BAT und versorgt hierüber auch Gleichstromlasten DC-L des Zuges, die in der Regel auf einem 110V Potenzial liegen, über eine DC-Schiene DC-S.

Demgegenüber versorgt Hilfsbetriebsumrichter-Pulswechselrichter HBU-PWR wie in FIGUR 1 über ein dem Pulswechselrichter HBU-PWR nachgeschalteten Funktionsmodul, der AC-Schiene AC-S, Wechselstrom/AC-Lasten AC-L.

Im Gleichstromzweig BLG, DC-S, DC-L, BAT ist die Tatsache, dass die durch das Batterieladegerät BLG ladbare Batterie BAT, letztlich gestützt durch das Batterieladegerät BLD, die Gleichstromlasten DC-L versorgt und durch einen von der Batterie BAT Pfeil zurück zum Batterieladegerät BLG gehenden Pfeil symbolisiert.

Die in der FIGUR 1 dargestellte Konfiguration der Energieversorgung, also der Aufbau und die Funktionsweise, wird in der Regel so in Nahverkehrszügen aber auch in Fernverkehrs-, insbesondere Hochgeschwindigkeits-, Zügen gemäß dem Stand der Technik eingesetzt. Deren Funktion hängt maßgeblich von einer Einspeisung im Eingangskreis EK ab. Fehlt diese, beispielsweise weil die Oberleitung ausgefallen oder der Kontakt hierzu gestört ist, kommt das diese Konfiguration aufweisende Schienenfahrzeug zum Stillstand und ein Einhalten der geforderten nicht zu überschreitenden CO2 Konzentration erfordert dann Abhilfemaßnamen. Hierzu zählt vor allem in Nahverkehrszügen das Öffnen von Kippfenstern oder ein Zuschalten von Lüftern, die für eine entsprechende Sauerstoffzufuhr mit den weiter oben erwähnten Nachteilen sorgen.

Die Erfindung schafft hier Besserung und setzt insbesondere bei dem Fall gemäß Stand der Technik an, bei dem Wechselstromlasten AC-L des Bordnetzes eines Schienenfahrzeuges - wie es beispielsweise die Lüfter sind - oder sogar die Traktionsmotoren (Antriebsmotoren) M durch die Batterie gespeist werden.

Anhand der in der FIGUR 2 als schematische Darstellung einer Konfiguration gezeigten Ausführungsbeispiele des erfindungsgemäßen Verfahrens und des erfindungsgemäßen Schienenfahrzeugs in Form eines Funktionsdiagrammes sollen weitere Vorteile und Details der Erfindung verdeutlicht werden.

Zu erkennen ist ein Traktionskreis EK, TR-ZWK, TR-PWR, M wie er auch im Stand der Technik bekannt ist, bei dem der Antriebsmotor M über dem Traktionszwischenkreis TR-ZWK nachgeschalteten Traktions-Pulswechselrichter TR-PWR mit einer aus dem Eingangskreis abgeführten Energie gespeist wird.

Im Unterschied zum Stand der Technik geht jedoch in den Betriebsfällen in denen keine Energie vom Einspeisekreis EK kommt, also insbesondere bei Ausfall der Oberleitung oder Ähnlichem, und für die die Konfiguration gemäß FIGUR 2 gilt, vom Funktionsmodul Batterie BAT eine Verbindung zum Traktionszwischenkreis TR-ZWK. Die Verbindung wird also erst in so einem Betriebsfall eingerichtet werden. Die Verbindung der Batterie zum TR-ZWK ist gepunktet dargestellt, da diese Verbindung nur umgesetzt wird, wenn das Fahrzeug auch aus der Batterie bewegt werden soll.

Bei dem dargestellten Beispiel ist es also vorgesehen, dass im Falle eines Wegbleibens der Einspeiseenergie die Batterie BAT für die Traktion des Schienenfahrzeugs sorgen kann. Die Energie der Batterie BAT also über den Traktionszwischenkreis TR-ZWK und dem nachgeschalteten Traktions-Pulswechselrichter TR-PWR den Motor M speist.

Dies kann sich beispielsweise besonders vorteilhaft erweisen, wenn die Ursache des Ausfalls der Einspeisung lokal begrenzt ist und man durch die Traktion des Schienenfahrzeugs mittels Batterie BAT zu einem Punkt auf der Bahnstrecke gelangt, wo die Hauptenergieversorgung nicht mehr gestört ist und sich somit die CO2 Belastung bei Normalbetrieb wieder normalisieren kann. An so einem Punkt kann der Motor M durch die reguläre Traktionsspeisung EK, TR-ZWK, TR-PWR mit Energie versorgt werden. Die Möglichkeit das Schienenfahrzeug ohne Einspeiseenergie zu bewegen hat zudem generell den offensichtlichen Vorteil, das Schienenfahrzeug an einen anderen Ort zu bringen, wie beispielsweise ein Abstellgleis, eine Stelle wo beispielsweise Personen gefahrlos das Schienenfahrzeug verlassen können.

Denkbar ist dabei auch, dass durch die Traktion mit entsprechenden Vorrichtungen wieder Teile der Energie zurückgewonnen werden können.

Ferner ist zu erkennen, dass bei der Konfiguration gemäß Ausführungsbeispielen des erfindungsgemäßen Verfahrens und Ausführungsbeispiel des erfindungsgemäßen Schienenfahrzeugs für den genannten Betriebsfall von der Batterie BAT über eine Potentialtrennung PT der Hilfsbetriebsumrichter-Zwischenkreis HBU-ZWK gespeist wird, welcher wiederum über den, Pulswechselumrichter HBU-PWR über die Wechselstromschiene AD-S Energie für die Wechselstromlasten AC-L zur Verfügung stellt.

Hierdurch wird Energie für die den Lufttausch ermöglichenden in der Regel mit Wechsel, insbesondere Drehstrom, betriebenen Lüfter bereitgestellt, so dass diese die CO2 Belastung der Luft verbessern können.

Ferner ist zu erkennen, dass wie in der Konfiguration gemäß Stand der Technik eine Verbindung zum Batterieladegerät BLG führt. Im Unterschied zum Stand der Technik ist jedoch hier in dem genannten Betriebsfall des Ausfalls der Einspeiseenergie von diesem Funktionsmodul die Batterie BAT in diesem Betriebsfall getrennt und speist über die im nachgeschaltete Gleichstromschiene DC-S Gleichstromlasten DC-L.

Hierdurch wird elektromagnetische Verträglichkeit (EMV) gewährleistet, die durch die europäische Norm EN50121-3-2 für die Gleichstromkreise gefordert wird, bei gleichzeitiger Gewährleistung der Speisung von Gleichstromlasten DC-L im genannten Betriebsfall.

Zudem ist die Batterie vorteilhafter Weise geschirmt ausgeführt, so dass die ebenfalls die EMV verbessert.

Zusammenfassend kann also festgehalten werden, dass bei den gezeigten Ausführungsbeispielen ersichtlich wird, dass in diesem Betriebsfall für die Nutzung im Normalbetrieb vorgesehene, also bestehende, statt zusätzliche Umrichter HBU-ZWK des Schienenfahrzeugs verwendet werden, wobei wie gezeigt, die Erfindung zudem eine Lösung dafür bietet, dass die für eine Nutzung im Normalbetrieb bestehenden Umrichter jedoch hinsichtlich der Vorgaben bzgl. EMV gemäß EN50121-3-2 nicht für den Betrieb am Batteriepotenzial geeignet sind, in dem die Batterie BAT vom 110V-Bordnetz abgetrennt und statt dessen mit den bestehenden Fahrzeug-Umrichtern verbunden wird. Dabei bietet die Erfindung, löst die Erfindung vorteilhaft auch, dass diese Umrichter HBU-ZWK die Batterie BAT hinsichtlich einer elektromagnetischen Verträglichkeit belasten, in dem sie vorsieht, dass die Batterie BAT geschirmt aufgebaut und betrieben werden.

Ergänzend kann dann die Erfindung derart weitergebildet werden, dass das verbliebene 110V-Bordnetz EMV-konform über das Batterieladegerät BLG, alternativ oder ergänzend aus einem zweiten Energieversorgungssystem (Hilfsbetriebsumrichter HBU, Batterieladegerät BLG) betrieben werden kann, wenn diese Redundanzen im betreffenden Schienenfahrzeug vorgesehen sind.

Es entfallen sowohl die Klappfenster wie sie im Nah- und Pendelverkehr genutzt werden und gesonderte Umrichter, die allein für diesen Betriebsfall vorgesehen werden, wie es beim Fernverkehr, insbesondere mit Hochgeschwindigkeitszügen, gemacht wird.

Die Erfindung ermöglicht eine sehr einfache, aufwandsarme und kostensparende Realisierung. Im Grunde ist hierzu lediglich ein Umverdrahten bekannter Funktionsmodule erforderlich, die unter anderem damit die gezeigte Veränderung der Betriebsführung herbeiführt und eine EMV-Kapselung der Batterie sinnvoll ergänzt. Einige Zusatzelemente wie beispielsweise Schütze können ebenfalls zum Einsatz kommen, sind aber vom Aufwand her im Vergleich zum aus dem Stand der Technik bekannten Ansatz vernachlässigbar.

Weitere Alternativen oder Ergänzungen können insbesondere zur Versorgung und zum Start des Systems die Erfindung weiterbilden:
a. Bei redundanten Systemen mit mehr als einer Batterie kann beispielsweise eine erste Batterie für das 110V-Bordnetz und eine zweite Batterie für die Speisung der Drehstrom-Notlüfter bzw. die Traktion verwendet werden.
b**.** Die im beschriebenen Betriebsfall hinsichtlich elektromagnetischer Verträglichkeit kritische Nutzung der Batterie, kann durch die Anwendung eines zusätzlichen, redundanten Umrichters hinsichtlich EMV Eigenschaften noch weiter verbessert werden.

Die Erfindung ist nicht auf die gezeigten und diskutierten Ausführungsbeispiele beschränkt. Vielmehr ist es so, dass mit der Erfindung, wie sie durch die Ansprüche definiert ist, sollen alle - auch nicht angesprochene - durch die Ansprüche abgedeckten Varianten umfasst sein, bei der vor allem die Nutzung der bereits für einen Normalbetrieb, gegebenenfalls als Redundanz vorgesehenen Umrichter HBU-ZWK, HBU-PWR für eine Versorgung von Teilen der Wechselstromkreise AC-L und/oder der Traktion unter Speisung, also Nutzung, der bereits für einen Normalbetrieb, gegebenenfalls als Redundanz vorgesehenen Batterie BAT, vorgesehen ist und mindestens derart ausgestaltet, dass sie für diesen Zweck mit entsprechenden Vorrichtungen zum Umschalten/-leiten der Ein- und/oder Ausgänge zumindest dieser genannten Einheiten vorgesehen sind, so dass es gewährleistet ist, dass bei Ausfall der Hauptenergieversorgung eines Schienenfahrzeugs ohne zusätzliche Hardware die notwendigen Wechselstrom-, insbesondere Drehstrom-, Verbraucher und vor allem während der Zeitdauer des Ausfalls den CO2 Wert aufwandsarm und so lange wie erforderlich unter dem vorgeschriebenen Grenzwert zu halten.

## Patentansprüche

1. Verfahren zum Betreiben eines Schienenfahrzeugs mit mindestens einem aus einem von einem Eingangsstromkreis (EK) abgezweigten Traktionszwischenkreis (TR-ZWK, TR-PWK) gespeisten, elektrische Fahrmotoren (M) aufweisenden, Motorwagen und mindestens einem nicht angetriebenen Wagen bei dem
- mindestens eine Batterie (BAT) durch ein Batterieladegerät (BLG) wiederaufladbar betrieben wird, wobei die Batterie (BAT) hierzu mit zumindest einer Gleichstromenergieversorgung (BLG, HBU) des Schienenfahrzeugs verbunden ist,
- die Batterie (BAT) zur Speisung von Gleichstromlasten (DC-L) funktional mit diesen Gleichstromlasten (DC-L) verbunden, betrieben (DC-S) und genutzt wird,
**dadurch gekennzeichnet, dass**
- die Batterie (BAT) derart betrieben wird, dass die Verbindung (DC-S) zu den Gleichstromlasten (DC-L) bei Ausfall einer Energieversorgung durch den Eingangsstromkreis (EK) zu mindestens einem ersten Zeitpunkt, insbesondere bei Auftreten eines Ausfalls einer Energieversorgung des Eingangskreises (EK), zumindest temporär trennbar ist,
- die Batterie (BAT) den Umrichter (HBU) eingangsseitig zumindest temporär verbindbar versorgt, wobei die Verbindung mit dem Umrichter (HBU) zeitlich disjunkt zur Verbindung (DC-S) mit den Gleichstromlasten (DC-L) erfolgt und während der Verbindung mit dem Umrichter (HBU) zumindest Teile von Wechselstromlasten (AC-L) und/oder den Motor (M) mit Energie versorgt werden.

2. Verfahren nach dem vorhergehenden Anspruch,
**dadurch gekennzeichnet, dass**
die Batterie (BAT) derart ausgestaltet ist, dass sie mit dem Traktionszwischenkreis (TR-ZWK, TR-PWK) zur Energieversorgung des Motors M zumindest temporär verbindbar ist, wobei die Verbindung zeitlich disjunkt zur Verbindung (DC-S) mit den Gleichstromlasten (DC-L) erfolgt.

3. Verfahren nach einem der vorhergehenden Ansprüche,
**dadurch gekennzeichnet, dass**
die Batterie (BAT) elektromagnetisch geschirmt betrieben wird.

4. Verfahren nach einem der vorhergehenden Ansprüche,
**dadurch gekennzeichnet, dass**
die Gleichstromenergieversorgung (BLG, HBU) zumindest für die ersten Zeitpunkte mit den Gleichstromlasten (DC-L) derart verbunden (DS-S) und betrieben wird, dass sie die Gleichstromlasten mit Energie versorgt.

5. Verfahren nach dem vorhergehenden Anspruch,
**dadurch gekennzeichnet, dass**
das Batterieladegerät (BLG) zu ersten Zeitpunkten die Gleichstromlasten (DC-L) derart verbunden (DS-S) und betrieben wird, dass sie die Gleichstromlasten mit Energie versorgt.

6. Verfahren nach einem der beiden vorhergehenden Ansprüche,
**dadurch gekennzeichnet, dass**
bei Betrieb eines Schienenfahrzeugs derart, dass die Gleichstromenergieversorgung (BLG, HBU) Redundanzen aufweist, insbesondere, dass eine erste und zweite Batterie (BAT) und/oder ein erster und ein zweiter Umrichter (HBU) betrieben werden, zu ersten Zeitpunkten die zweite Batterie (BAT) direkt und/oder die erste Batterie (BAT) über den zweiten Umrichter (HBU) zumindest temporär mit den Gleichstromlasten (DC-L) verbunden (DC-S) werden.

7. Schienenfahrzeug aufweisend
- mindestens einen aus einem von einem Eingangsstromkreis (EK) abgezweigten Traktionszwischenkreis (TR-ZWK, TR-PWK) gespeisten, elektrische Fahrmotoren (M) aufweisenden Motorwagen, bei dem
- mindestens eine Batterie (BAT), die mit zumindest einer Gleichstromenergieversorgung (BLG, HBU) des Schienenfahrzeugs derart verbunden ist, dass es durch ein Batterieladegerät (BLG) des Schienenfahrzeugs wiederaufladbar betrieben wird,
- die Batterie (BAT) zur Speisung von Gleichstromlasten (DC-L) funktional mit diesen Gleichstromlasten (DC-L) ausgestaltet und verbunden (DC-S) ist,
**dadurch gekennzeichnet, dass**
- die Batterie (BAT) derart ausgestaltet ist, dass die Verbindung (DC-S) zu den Gleichstromlasten (DC-L) bei Ausfall einer Energieversorgung durch den Eingangsstromkreis (EK) zu mindestens einem ersten Zeitpunkt, insbesondere bei Auftreten eines Ausfalls einer Energieversorgung des Eingangskreises (EK), zumindest temporär trennbar ist,
- die Batterie (BAT) derart ausgestaltet ist, dass sie mit dem Umrichter (HBU) zumindest temporär verbindbar ist, wobei die Verbindung mit dem Umrichter (HBU) zeitlich disjunkt zur Verbindung (DC-S) mit den Gleichstromlasten (DC-L) erfolgt und während der Verbindung mit dem Umrichter (HBU) zumindest Teile von Wechselstromlasten (AC-L) und/oder den Motor (M) mit Energie versorgt werden.

8. Schienenfahrzeug nach dem vorhergehenden Anspruch,
**dadurch gekennzeichnet, dass**
die Batterie (BAT) derart ausgestaltet ist, dass sie mit dem Traktionszwischenkreis (TR-ZWK, TR-PWK) zur Energieversorgung des Motors M zumindest temporär verbindbar ist, wobei die Verbindung zeitlich disjunkt zur Verbindung (DC-S) mit den Gleichstromlasten (DC-L) erfolgt.

9. Schienenfahrzeug nach einem der vorhergehenden Ansprüche,
**dadurch gekennzeichnet, dass**
die Batterie (BAT) mit einer elektromagnetischen Schirmung ausgeführt ist.

10. Schienenfahrzeug nach einem der vorhergehenden Ansprüche,
**dadurch gekennzeichnet, dass**
die Gleichstromenergieversorgung (BLG, HBU) derart ausgestaltet ist, dass sie zumindest für die ersten Zeitpunkten mit den Gleichstromlasten (DC-L) derart verbunden (DC-S) und ausgestaltet ist, dass es die Gleichstromlasten (DC-L) mit Energie versorgt.

11. Schienenfahrzeug nach dem vorhergehenden Anspruch,
**dadurch gekennzeichnet, dass**
das Batterieladegerät (BLG) derart ausgestaltet ist, dass es zu ersten Zeitpunkten mit den Gleichstromlasten (DC-L) derart verbunden (DC-S) und ausgestaltet ist, dass es die Gleichstromlasten (DC-L) mit Energie versorgt.

12. Schienenfahrzeug nach einem der beiden vorhergehenden Ansprüche,
**dadurch gekennzeichnet, dass**
bei Betrieb eines Schienenfahrzeugs derart, dass die Gleichstromenergieversorgung (BLG, HBU) Redundanzen, insbesondere, dass eine erste und zweite Batterie (BAT) und/oder ein erster und zweiter Umrichter (HBU) betrieben werden, zu ersten Zeitpunkten die zweite Batterie (BAT) direkt und/oder die erste Batterie (BAT) über den zweiten Umrichter (HBU) zumindest temporär mit den Gleichstromlasten (DC-L) verbindbar (DC-S) ist.

## Claims

1. Method for operating a rail vehicle comprising at least one motor car, which is fed from a traction intermediate circuit (TR-ZWK, TR-PWK) branched off from an input circuit (EK) and has electrical traction motors (M), and at least one non-driven car, in which
- at least one battery (BAT) is operated so as to be rechargeable by way of a battery charger (BLG), wherein the battery (BAT) is connected to at least one DC energy supply (BLG, HBU) of the rail vehicle for this purpose,
- the battery (BAT) is functionally connected to DC loads (DC-L), operated (DC-S) and used in order to feed these DC loads (DC-L),
**characterized in that**
- the battery (BAT) is operated in such a way that the connection (DC-S) to the DC loads (DC-L) is able to be at least temporarily disconnected in the event of a failure of an energy supply by the input circuit (EK) at at least a first instant, in particular in the event of a failure of an energy supply of the input circuit (EK),
- the battery (BAT) supplies power to the input of the converter (HBU) in an at least temporarily connectable manner, wherein the connection to the converter (HBU) takes place at a time separate from the connection (DC-S) to the DC loads (DC-L) and, during the connection to the converter (HBU), at least some AC loads (AC-L) and/or the motor (M) are/is supplied with energy.

2. Method according to the preceding claim,
**characterized in that**
the battery (BAT) is configured in such a way that it is able to be connected at least temporarily to the traction intermediate circuit (TR-ZWK, TR-PWK) for the purpose of supplying energy to the motor M, wherein the connection takes place at a time separate from the connection (DC-S) to the DC loads (DC-L).

3. Method according to either of the preceding claims,
**characterized in that**
the battery (BAT) is operated in an electromagnetically shielded manner.

4. Method according to one of the preceding claims,
**characterized in that**
the DC energy supply (BLG, HBU) is connected (DS-S) to the DC loads (DC-L) at least for the first instants and operated in such a way that it supplies energy to the DC loads.

5. Method according to the preceding claim,
**characterized in that**
the battery charger (BLG) is connected (DS-S) to the DC loads (DC-L) at first instants and operated in such a way that it supplies energy to the DC loads.

6. Method according to one of the two preceding claims,
**characterized in that**,
when a rail vehicle is operated in such a way that the DC energy supply (BLG, HBU) has redundancies, in particular that a first and a second battery (BAT) and/or a first and a second converter (HBU) are operated, at first instants, the second battery (BAT) is connected (DC-S) at least temporarily to the DC loads (DC-L) directly and/or the first battery (BAT) is connected (DC-S) at least temporarily to the DC loads (DC-L) via the second converter (HBU).

7. Rail vehicle having
- at least one motor car, which is fed from a traction intermediate circuit (TR-ZWK, TR-PWK) branched off from an input circuit (EK) and has electrical traction motors (M), in which
- at least one battery (BAT) that is connected to at least one DC energy supply (BLG, HBU) of the rail vehicle in such a way that it is operated so as to be rechargeable by way of a battery charger (BLG) of the rail vehicle,
- the battery (BAT) is functionally configured and connected (DC-S) to DC loads (DC-L) in order to feed these DC loads (DC-L),
**characterized in that**
- the battery (BAT) is configured in such a way that the connection (DC-S) to the DC loads (DC-L) is able to be at least temporarily disconnected in the event of a failure of an energy supply by the input circuit (EK) at at least a first instant, in particular in the event of a failure of an energy supply of the input circuit (EK),
- the battery (BAT) is configured in such a way that it is at least temporarily connectable to the converter (HBU), wherein the connection to the converter (HBU) takes place at a time separate from the connection (DC-S) to the DC loads (DC-L) and, during the connection to the converter (HBU), at least some AC loads (AC-L) and/or the motor (M) are/is supplied with energy.

8. Rail vehicle according to the preceding claim,
**characterized in that**
the battery (BAT) is configured in such a way that it is able to be connected at least temporarily to the traction intermediate circuit (TR-ZWK, TR-PWK) for the purpose of supplying energy to the motor M, wherein the connection takes place at a time separate from the connection (DC-S) to the DC loads (DC-L).

9. Rail vehicle according to one of the preceding claims,
**characterized in that**
the battery (BAT) is designed with an electromagnetic shield.

10. Rail vehicle according to one of the preceding claims,
**characterized in that**
the DC energy supply (BLG, HBU) is configured in such a way that it is connected (DC-S) to the DC loads (DC-L) at least for the first instants and configured in such a way that it supplies energy to the DC loads (DC-L).

11. Rail vehicle according to the preceding claim,
**characterized in that**
the battery charger (BLG) is configured in such a way that it is connected (DC-S) to the DC loads (DC-L) at first instants and configured in such a way that it supplies energy to the DC loads (DC-L).

12. Rail vehicle according to one of the two preceding claims,
**characterized in that**,
when a rail vehicle is operated in such a way that the DC energy supply (BLG, HBU) redundancies, in particular that a first and a second battery (BAT) and/or a first and a second converter (HBU) are operated, at first instants, the second battery (BAT) is able to be connected (DC-S) at least temporarily to the DC loads (DC-L) directly and/or the first battery (BAT) is able to be connected (DC-S) at least temporarily to the DC loads (DC-L) via the second converter (HBU).

## Revendications

1. Procédé de fonctionnement d'un véhicule ferroviaire avec au moins un parmi un véhicule à moteur comportant des moteurs électriques d'entraînement (M), alimenté par un circuit intermédiaire de traction (TR-ZWK, TR-PWK) dérivé d'un circuit d'alimentation en entrée (EK), et au moins un véhicule non entraîné, dans lequel
- au moins une batterie (BAT) est actionnée par un chargeur de batterie (BLG) de façon rechargeable, la batterie (BAT) étant reliée pour ce faire à au moins une alimentation en courant continu (BLG, HBU) du véhicule ferroviaire,
- la batterie (BAT) est reliée à des charges en courant continu (DC-L), actionnée (DC-S) et utilisée pour les alimenter,
**caractérisé en ce que**
- la batterie (BAT) est actionnée de telle sorte que la liaison (DC-S) avec les charges en courant continu (DC-L) puisse être coupée au moins temporairement en cas de panne d'une alimentation en énergie via le circuit d'alimentation en entrée (EK) à au moins un premier instant, en particulier en cas de survenue d'une panne d'une alimentation en énergie par le circuit d'alimentation en entrée (EK),
- la batterie (BAT) peut être reliée en entrée au moins temporairement pour alimenter l'onduleur, la liaison avec l'onduleur (HBU) se faisant à un instant distinct de la liaison (DC-S) avec les charges en courant continu (DC-L), et pendant la liaison avec l'onduleur (HBU), au moins des parties de charges en courant alternatif (AC-L) et/ou le moteur (M) sont alimentés en énergie.

2. Procédé selon la revendication précédente,
**caractérisé en ce que**
la batterie (BAT) est configurée de façon à pouvoir être reliée au moins temporairement avec le circuit intermédiaire de traction (TR-ZWK, TR-PWK) pour alimenter en énergie le moteur M, la liaison se faisant à un instant distinct de la liaison (DC-S) avec les charges en courant continu (DC-L).

3. Procédé selon l'une quelconque des revendications précédentes,
**caractérisé en ce que**
la batterie (BAT) est actionnée avec un blindage électromagnétique.

4. Procédé selon l'une quelconque des revendications précédentes,
**caractérisé en ce que**
l'alimentation en courant continu (BLG, HBU), au moins pendant les premiers instants, est reliée (DS-S) aux charges en courant continu (DC-L) et actionnée de telle sorte qu'elle alimente les charges en courant continu en énergie.

5. Procédé selon la revendication précédente,
**caractérisé en ce que**
le chargeur de batterie (BLG), au moins pendant les premiers instants, est relié (DS-S) aux charges en courant continu (DC-L) et actionné de telle sorte qu'il alimente les charges en courant continu en énergie.

6. Procédé selon l'une quelconque des revendications précédentes,
**caractérisé en ce que**
pendant le fonctionnement d'un véhicule ferroviaire, à de premiers instants, la deuxième batterie (BAT) directement et/ou la première batterie (BAT) via le deuxième onduleur (HBU) soit reliée (DC-S) au moins temporairement aux charges en courant continu (DC-L), de sorte que l'alimentation en courant continu (BLG, HBU) présente des redondances, en particulier de sorte qu'une première et une deuxième batterie (BAT) et/ou un premier et un deuxième onduleur (HBU) soient actionnés.

7. Véhicule ferroviaire comportant
- au moins un véhicule à moteur comportant des moteurs électriques d'entraînement (M), alimenté par un circuit intermédiaire de traction (TR-ZWK, TR-PWK) dérivé d'un circuit d'alimentation en entrée (EK), dans lequel
- au moins une batterie (BAT), qui est reliée à au moins une alimentation en courant continu (BLG, HBU) du véhicule ferroviaire, de façon à être actionnée de façon rechargeable par un chargeur de batterie (BLG) du véhicule ferroviaire,
- la batterie (BAT) est configurée fonctionnellement et est reliée (DC-S) à des charges en courant continu (DC-L) pour alimenter les charges en courant continu (DC-L),
**caractérisé en ce que**
- la batterie (BAT) est configurée de telle sorte que la liaison (DC-S) avec les charges en courant continu (DC-L) puisse être coupée au moins temporairement en cas de panne d'une alimentation en énergie via le circuit d'alimentation en entrée (EK) à au moins un premier instant, en particulier en cas de survenue d'une panne d'une alimentation en énergie par le circuit d'alimentation en entrée (EK),
- la batterie (BAT) est configurée de telle sorte qu'elle peut être reliée au moins temporairement à l'onduleur, la liaison avec l'onduleur (HBU) se faisant à un instant distinct de la liaison (DC-S) avec les charges en courant continu (DC-L), et pendant la liaison avec l'onduleur (HBU), au moins des parties de charges en courant alternatif (AC-L) et/ou le moteur (M) sont alimentés en énergie.

8. Véhicule ferroviaire selon la revendication précédente
**caractérisé en ce que**
la batterie (BAT) est configurée de façon à pouvoir être reliée au moins temporairement avec le circuit intermédiaire de traction (TR-ZWK, TR-PWK) pour alimenter en énergie le moteur M, la liaison se faisant à un instant distinct de la liaison (DC-S) avec les charges en courant continu (DC-L).

9. Véhicule ferroviaire selon l'une des revendications précédentes,
**caractérisé en ce que**
la batterie (BAT) est réalisée avec un blindage électromagnétique.

10. Véhicule ferroviaire selon l'une des revendications précédentes,
**caractérisé en ce que**
l'alimentation en courant continu (BLG, HBU) est configurée de telle sorte qu'au moins pendant les premiers instants, elle est reliée (DC-S) aux charges en courant continu (DC-L) et configurée de telle sorte qu'elle alimente les charges en courant continu (DC-L) en énergie.

11. Véhicule ferroviaire selon la revendication précédente
**caractérisé en ce que**
le chargeur de batterie (BLG) est configuré de telle sorte qu'au moins pendant les premiers instants, il est relié (DC-S) aux charges en courant continu (DC-L) et configuré de telle sorte qu'il alimente les charges en courant continu (DC-L) en énergie.

12. Véhicule ferroviaire selon l'une quelconque des deux revendications précédentes,
**caractérisé en ce que**
pendant le fonctionnement d'un véhicule ferroviaire, à de premiers instants, la deuxième batterie (BAT) directement et/ou la première batterie (BAT) via le deuxième onduleur (HBU) puisse être reliée (DC-S) au moins temporairement aux charges en courant continu (DC-L), de sorte que l'alimentation en courant continu (BLG, HBU) présente des redondances, en particulier de sorte qu'une première et une deuxième batterie (BAT) et/ou un premier et un deuxième onduleur (HBU) soient actionnés.
